# EUROPÄISCHE PATENTSCHRIFT

(11) **EP 4 092 264 B1**
(45) Veröffentlichungstag und Bekanntmachung des Hinweises auf die Patenterteilung: **04.11.2026**
(21) Anmeldenummer: 21174699.5
(22) Anmeldetag: 19.05.2021
(51) Int. Cl.: F03D 7/02, F03D 7/04

(54) **VERFAHREN ZUM STEUERN EINER WINDENERGIEANLAGE, REGLERSTRUKTUR, WINDENERGIEANLAGE UND WINDPARK**
METHOD FOR OPERATING A WIND TURBINE, CONTROLLER, WIND TURBINE, AND WIND FARM
PROCÉDÉ DE COMMANDE D'UNE ÉOLIENNE, SYSTÈME DE COMMANDE, ÉOLIENNE ET PARC ÉOLIEN

(43) Veröffentlichungstag der Anmeldung: 23.11.2022
(73) Patentinhaber: Wobben Properties GmbH, 26607 Aurich (DE)
(72) Erfinder: von Aswege, Enno, 26629 Großefehn (DE)
(74) Vertreter: Eisenführ Speiser

(56) Entgegenhaltungen:
- EP-A1- 3 179 097
- EP-A1- 4 033 090
- WO-A1-2020/178182
- US-A1- 2018 010 577

## Beschreibung

Die vorliegende Offenbarung betrifft ein Verfahren zum Steuern einer Windenergieanlage, eine zugehörige Windenergieanlage und einen zugehörigen Windpark.

Windenergieanlagen sind bekannt, sie gewinnen elektrische Leistung aus Wind. Dazu weisen sie üblicherweise einen Rotor mit Rotorblättern auf, die vom Wind bewegt werden. Der Rotor rotiert daraufhin mit einer Rotordrehzahl, die auch von der Windgeschwindigkeit abhängt, und treibt einen Generator an.

Zum Steuern dieser Leistungserzeugung können die Rotorblätter in ihrem Anstellwinkel verstellt werden, was als Pitchen bezeichnet wird. Außerdem kann die Abgabeleistung bzw. ein Generatormoment des Generators zum Steuern der Windenergieanlage beeinflusst werden. Damit resultiert auch eine variable Rotordrehzahl und damit variable Generatordrehzahl. Im Falle einer getriebelosen Windenergieanlage entspricht die Rotordrehzahl der Generatordrehzahl.

Die Steuerung der Windenergieanlage hat besonders die Aufgabe, bei niedrigen Drehzahlen einen möglichst leistungsoptimalen Betrieb zu gewährleisten, bei dem möglichst viel Leistung erzeugt wird. Bei hohen Windgeschwindigkeiten ist die Windenergieanlage so zu steuern, dass eine Drehzahlbegrenzung und eine Leistungsbegrenzung eingehalten werden, ohne dass übermäßige Lasten auf die Windenergieanlage wirken.

Bei geringen Windgeschwindigkeiten kann auch von einem Teillastbetrieb oder Teillastbereich und bei hohen Windgeschwindigkeiten von einem Volllastbetrieb bzw. Volllastbereich gesprochen werden. Im Teillastbetrieb ist also möglichst viel Leistung zu erzeugen und im Volllastbetrieb ist die Windenergieanlage so zu steuern, dass sie vor einer Überlastung geschützt wird. Entsprechende Steuerkonzepte sind bekannt. Demnach wird üblicherweise für den Teillastbestrieb eine Kennliniensteuerung verwendet, bei der eine Betriebskennlinie einen Zusammenhang zwischen Drehzahl und dazu einzustellender Leistung vorgibt. Der Blattwinkel ist dabei meist konstant. Im Volllastbetrieb wird meist eine Drehzahlregelung eingesetzt, die über die Verstellung der Rotorblätter versucht, die Drehzahl bei konstanter Leistung ebenfalls konstant zu halten.

Zu diesen Grundanforderungen können weitere Besonderheiten hinzukommen. So kommt es immer häufiger vor, dass seitens eines Netzbetreibers eine Änderung eines Leistungssollwertes gefordert wird, auf die die Windenergieanlage rasch reagieren muss. Zudem gibt es weitere Anfälligkeiten der Regelung, insbesondere der Drehzahlregelung, wodurch kurzzeitige Windeinbrüche zu Ertragsverlusten führen.

US 2018/010577 A1 beschreibt ein Verfahren zur Steuerung einer Windenergieanlage im Teil- und Volllastbetrieb. Um die Nachteile des Wechsels zwischen Teil- und Volllastregler zu vermeiden, ist das Windenergieanlagen-Steuerungssystem so konfiguriert, dass sowohl der Teil- als auch der Volllastregler die Regelung bei Teil- und Volllast übernehmen. Zu diesem Zweck sind die Teil- und Volllastregler mit variablen Verstärkungen konfiguriert, wobei die Verstärkungsplanung so durchgeführt wird, dass die Verstärkung des Teillastreglers größer ist als die Verstärkung des Volllastreglers bei Teillast und umgekehrt, sodass die Verstärkung des Volllastreglers bei Volllast größer ist als die Verstärkung des Teillastreglers.

EP 4 033 090 A1 beschreibt ein Verfahren zur unterschiedlichen Regelung einer Windenergieanlage im Teillast- und Volllastbetrieb. Genauer soll die Windenergieanlage in einem Übergangsbereich zwischen Teillast- und Volllastbetrieb von einer Drehzahlleistungsregelung geregelt werden, die als Kaskadenregelung ausgestaltet ist und anhand einer Solldrehzahl und eines Beschleunigungssollwertes des Rotors regelt. Auch wird eine Kopplung von Drehzahlleistungsregelung und Pitchregelung beschrieben, die eine Regelreserve berücksichtigt.

Der vorliegenden Offenbarung lag vor diesem Hintergrund die Aufgabe zugrunde, eine verbesserte Drehzahlregelung einer Windenergieanlage, also ein Verfahren zum Steuern einer Windenergieanlage sowie eine zugehörige Windenergieanlage, bereitzustellen.

In einem Aspekt wird ein Verfahren zum Steuern einer Windenergieanlage nach Anspruch 1 vorgeschlagen, wobei die Windenergieanlage einen aerodynamischen Rotor aufweist, der mit variabler Drehzahl betrieben wird, und der in ihrem Blattwinkel verstellbare Rotorblätter aufweist, wobei die Windenergieanlage in wenigstens einem Betriebsbereich durch eine Drehzahlregelung geregelt wird, bei der die Drehzahl durch Verstellen einer Rotorzustandsgröße der Rotorblätter auf einen Drehzahlsollwert, genannt Solldrehzahl, geregelt wird.

Die Drehzahlregelung schließt für die Einstellung der Rotorzustandsgröße die Verwendung eines Reservewertes ein, wobei der Reservewert aus einem Vergleich einer Zielleistung oder eines Zielmoments der Windenergieanlage mit einer Momentanleistung oder einem Momentanmoment der Windenergieanlage für den Fall erhalten wird, dass die Windenergieanlage noch nicht bei der Zielleistung bzw. dem Zielmoment betrieben wird.

Das Verfahren bietet demnach eine Erweiterung für eine bekannte Reglerstruktur, bei der die Drehzahlregelung durch Verstellen der Rotorzustandsgröße als Stellgröße erfolgt. Indem der Reservewert herangezogen wird, um die Stellgröße bzw. deren Regelfehler zu korrigieren, werden größere Ausschläge der Stellgröße ermöglicht, nämlich immer dann, wenn eine hinreichende Reserve vorhanden ist. Der Reservewert kann beispielsweise als ein Maß verstanden werden, wie viel zusätzliche Leistung die Windenergieanlage aus dem Wind entnehmen könnte, ohne an Leistungs- oder Lastschranken zu gelangen.

Erfindungsgemäß kann das Einschließen des Reservewertes an einer beliebigen Stelle der Drehzahlregelung umgesetzt werden. Wenn beispielsweise die Drehzahlregelung einen P- und/oder -D-Regler enthält, so kann der Reservewert zur Beeinflussung der Regelung vor oder nach den einzelnen Regelgliedern erfolgen. Im Fall von parallelen Regelästen kann auch sogar nur einer der Regeläste durch den Reservewert beeinflusst werden.

Für die Erfindung ist lediglich entscheidend, dass die im Rahmen der Drehzahlregelung letztlich eingestellte Rotorzustandsgröße eine Abhängigkeit von dem Reservewert zeigt. Bei unterschiedlichen Reservewerten wird demnach ein Unterschied der einzustellenden Rotorzustandsgröße bemerkbar sein. Die genaue Umsetzung und interne Integration des Reservewertes in bekannte Drehzahlregelungen werden nach fachmännischen Wissen umgesetzt.

Die Rotorzustandsgröße kann beispielsweise ein Pitchwinkel oder auch eine Pitchrate sein, wobei auch andere Rotorzustandsgrößen wie Auslenkwinkel aerodynamischer Anbauteile, bspw. Klappen, oder auch Verwindungen des Rotorblattes selbst und ähnliches vorstellbar sind.

Vorzugsweise erfolgt keine gleichzeitige Anpassung eines Generatormomentes bzw. einer Generatorleistung des Generators, da das Generatormoment bzw. die Generatorleistung als Momentanleistung bzw. Momentanmoment Eingang in die Bestimmung des Reservewertes findet.

Die Momentanleistung ist vorzugsweise entweder eine Ist-Leistung wie beispielsweise eine Luftspaltleistung des Generators, eine Leistung am Transformator oder ein dazwischenliegender Leistungswert. Diese Ist-Leistung kann durch einen oder mehrere Leistungssensoren bestimmt werden. Die Momentanleistung kann aber auch einen aktuellen Sollwert der entsprechenden Leistung enthalten, der als Sollwert für die Leistungsregelung zur Anwendung kommt. Entscheidend ist, dass die Momentanleistung den gleichen Bezugspunkt wie die Zielleistung hat.

Gegenüber einer Ist-Leistung kann bei Verwendung eines Sollwertes der Leistungsregelung das Fehlerszenario nicht auftreten, dass die Reserveleistung bei einem Leistungsregelfehler im Generator dauerhaft anliegt.

Hier und im weiteren Verlauf der vorliegenden Offenbarung wird die Beschreibung vorwiegend unter Verwendung von Leistungen ausgeführt. Analog kann jeweils an die Stelle von Leistungen ein entsprechendes Moment treten ohne dass dies in jedem Fall explizit ausgeführt ist. Die für Leistungen beschriebenen Ausgestaltungen sind also ebenso und unter Erreichung der gleichen Vorteile mit entsprechenden Momenten umsetzbar.

Die Drehzahlregelung erfolgt so, dass aus einem Vergleich einer vorgegebenen Solldrehzahl mit einer erfassten Istdrehzahl ein erster Regelfehler des Rotors bestimmt wird, der erste Regelfehler mit dem Reservewert korrigiert wird, um einen zweiten Regelfehler zu erhalten, und aus dem zweiten Regelfehler ein Pitchwinkel oder eine Pitchrate als Sollwert für die Einstellung der Rotorzustandsgröße bestimmt wird.

Es wird also der Reservewert vor der Bestimmung eines Sollwertes für die Einstellung der Rotorzustandsgröße einbezogen, während der Reservewert in anderen Ausführungen auch beispielsweise erst zur Korrektur des bestimmten Sollwertes einbezogen wird.

Unter anderem aufgrund der Rotorträgheit ist es eine Herausforderung, eine Drehzahlregelung zur schnellen Einregelung von Leistungsänderungen heranzuziehen. Indem der Drehzahlregelfehler, genannt erster Regelfehler, mit diesem Reservewert korrigiert wird, kann der daraus resultierende zweite Regelfehler einen höheren Wert als die tatsächliche Abweichung von Solldrehzahl und Istdrehzahl annehmen. Dieser beispielsweise höhere zweite Regelfehler kann demnach eine schnellere Einregelung von Leistungsänderungen ermöglichen, da die Rotorzustandsgröße um einen beispielsweise größeren Betrag als durch den eigentlichen Drehzahlregelfehler angezeigt verstellt wird.

Vorzugsweise wird die Zielleistung bzw. das Zielmoment als der geringste Wert der folgenden Werte bestimmt:
- eine maximale Leistung bzw. ein maximales Moment der Windenergieanlage,
- eine maximale Leistung bzw. ein maximales Moment, die eine netzseitige Leistungsbegrenzung zulässt, und
- eine maximale Leistung bzw. ein maximales Moment aus einem Sonderbetrieb der Windenergieanlage, insbesondere einem Generatortrocknungsbetrieb und/oder einem Sturmregelungsbetrieb.

Eine maximale Leistung bzw. ein maximales Moment ist hier insbesondere aufgrund von Belastungsgrenzen wie strukturellen Belastungsgrenzen beispielsweise des Generators, der Aerodynamik, der Lasten etc. gegeben. Sie kann in gewissen Fällen auch über einer Nennleistung der Windenergieanlage liegen, beispielsweise wenn bei kalten Temperaturen auch eine höhere Generatorleistung als die Nennleistung ohne Beschädigung des Generators realisierbar ist.

Die maximale Leistung bzw. das maximale Moment kann in anderen Fällen aber auch durch die Nennleistung der Windenergieanlage bestimmt sein.

Vorzugsweise werden auf dem Reservewert vor der der Einbeziehung in die Drehzahlregelung wenigstens eine, vorzugsweise mehrere und besonders bevorzugt sämtliche der nachfolgenden Operationen a) bis d) ausgeführt.
a) Nullsetzen des Reservewertes für den Fall, dass eine Abweichung der Solldrehzahl von der erfassten Istdrehzahl einen Schwellenwert unterschreitet. Hierdurch wird ein Signifikanzkriterium für die Abweichung der Solldrehzahl von der Istdrehzahl eingesetzt.
b) Nullsetzen des Reservewertes für den Fall, dass der Reservewert negativ ist. Dadurch kann sichergestellt werden, dass entsprechend der Bedeutung des Begriffs "Reserve" lediglich positive Leistungs- bzw. Momentreserven Eingang in die weitere Regelung erhalten.
c) Skalieren, insbesondere Abschwächen, des Reservewertes gemäß einer Filterfunktion. Mit dieser Operation kann die Wirkung betragsmäßig großer Reservewerte abgeschwächt werden, was beispielsweise aus Lastgründen vorteilhaft ist.
d) Begrenzen des Reservewertes auf einen maximalen Reservewert. Auch diese Operation kann aus Lastgründen vorteilhaft sein, da betragsmäßig zu große Reservewerte verhindert werden.

Vorzugsweise wird der erste Regelfehler vor Korrektur mit dem Reservewert mittels wenigstens eines Regelfehlergrenzwertes auf einen zulässigen Bereich von Regelfehlern beschränkt.

Hierbei ist die Beschränkung sowohl an einer unteren Grenze, d.h. hinsichtlich der Abbremsung des Rotors, als auch an einer oberen Grenze, also hinsichtlich der Beschleunigung des Rotors, vorteilhaft. Dies erfolgt insbesondere aus Lastüberlegungen.

Nach der Korrektur mit dem Reservewert sind höhere Werte des Regelfehlers außerhalb des zulässigen Bereiches möglich. Der zweite Regelfehler kann demnach über dem liegen, was für den ersten Regelfehler als zulässig vorgesehen ist.

Vorzugsweise ist der wenigstens eine Regelfehlergrenzwert einstellbar und/oder sind als der wenigstens eine Regelfehlergrenzwert ein oberer und ein unterer Regelfehlergrenzwert mit unterschiedlichen Werten vorgesehen.

Vorzugsweise wird der erste Regelfehler basierend auf einer Drehzahländerung, einer Drehzahlbeschleunigung, einer Funktion der Drehzahländerung und/oder einer Funktion der Drehzahlbeschleunigung bestimmt.

Die Drehzahl ist als Regelgröße vergleichsweise träge. Es hat sich herausgestellt, dass eine Regelung der Drehzahl basierend auf einer Drehzahländerung, einer Drehzahlbeschleunigung oder einer Funktion davon eine effektivere und schnellere Regelung der Drehzahl ermöglicht.

Vorzugsweise weist die Drehzahlregelung eine äußere Kaskade enthaltend einen ersten Regler und eine innere Kaskade enthaltend einen zweiten Regler auf, wobei der zweite Regler insbesondere einen mit dem Reservewert korrigierten Regelfehler als Führungsgröße enthält.

Hierbei umfasst der Regelfehler des zweiten Reglers einen Beschleunigungssollwert des Rotors.

Erfindungsgemäß umfasst der erste Regelfehler einen ersten Beschleunigungssollwert und der zweite Regelfehler einen zweiten Beschleunigungssollwert, und der zweite Beschleunigungssollwert wird mit einem Beschleunigungsistwert des Rotors verglichen, um einen Pitchwinkel oder eine Pitchrate als Sollwert für die Einstellung der Rotorzustandsgröße zu bestimmen.

Erfindungsgemäß sind der erste Beschleunigungssollwert, der zweite Beschleunigungssollwert und der Beschleunigungsistwert jeweils als eine Beschleunigungsleistung und/oder ein Beschleunigungsmoment ausgebildet, wobei die Beschleunigungsleistung einer Rotorbeschleunigung zugeordnet ist und eine Leistung beschreibt, die erforderlich ist, die Rotorbeschleunigung hervorzurufen und/oder das Beschleunigungsmoment einer Rotorbeschleunigung zugeordnet ist und ein Moment beschreibt, das erforderlich ist, die Rotorbeschleunigung hervorzurufen.

Vorzugsweise weist die innere Kaskade, insbesondere der zweite Regler, zum Bestimmen einer bzw. der Stellgröße zum Einstellen der Rotorzustandsgröße ein Integralglied mit einer Integratorbegrenzung auf.

Vorzugsweise ist die Integratorbegrenzung einstellbar und/oder weist die Integratorbegrenzung unterschiedliche obere und untere Grenzwerte auf.

Vorzugsweise umfasst ein Rückführungssignal zum zweiten Regler eine von dem Rotor aufgenommene aerodynamische Leistung, wobei die von dem Rotor aufgenommene aerodynamische Leistung eine Summe aus einer Rotorbeschleunigungsleistung und wenigstens einer von einer weiteren Komponente der Windenergieanlage aufgenommenen Leistung, insbesondere einer Generatorleistung eines Generators der Windenergieanlage, umfasst, wobei die Rotorbeschleunigungsleistung den Teil einer von dem Rotor der Windenergieanlage aufgenommenen Leistung beschreibt, der in eine Beschleunigung des Rotors umgewandelt wird.

Vorzugsweise umfasst das Verfahren weiter a) Bestimmen einer aerodynamischen Turmschwingungsleistung bzw. eines aerodynamischen Turmschwingungsmoments und b) Korrigieren der Rotorbeschleunigungsleistung unter Verwendung der aerodynamischen Turmschwingungsleistung bzw. des aerodynamischen Turmschwingungsmoments.

Durch die Berücksichtigung der aerodynamischen Turmschwingungsleistung wird die tatsächliche auf den Wind zurückzuführende aerodynamische Beschleunigungsleistung erhalten, wodurch die Drehzahlregelung weiter verbessert werden kann.

Vorzugsweise umfasst das Bestimmen der aerodynamischen Turmschwingungsleistung bzw. des aerodynamischen Turmschwingungsmomentes:
- Bestimmen einer absoluten Windgeschwindigkeit im Bereich der Windenergieanlage,
- Bestimmen einer reinen Windleistung auf den Rotor auf Grundlage der absoluten Windgeschwindigkeit,
- Bestimmen einer scheinbaren Windleistung bzw. eines scheinbaren Windmoments auf den Rotor auf Grundlage der Geschwindigkeit des Turmkopfes und/oder der Gondel;
- Bestimmen der aerodynamischen Turmschwingungsleistung bzw. des aerodynamischen Turmschwingungsmoments auf Grundlage einer Differenz der scheinbaren Windleistung und der reinen Windleistung.

Indem die aerodynamische Turmschwingungsleistung aus scheinbarer Windleistung und reiner Windleistung bestimmt wird, lässt sich die Windenergieanlage präziser und schneller regeln. Insbesondere kann dadurch die Störgröße für die Regelung entkoppelt werden, was in der Folge dazu führt, dass die Regelung, insbesondere die Drehzahlregelung der Windenergieanlage, die Turmschwingungen gar nicht erst anregt. Demnach verliert das typischerweise notwendige Dämpfen der Turmschwingungen erfindungsgemäß bereits deshalb an Bedeutung, da die Turmschwingungen gar nicht erst angeregt werden.

Die Geschwindigkeit des Turmkopfes beziehungsweise der Gondel kann auf bekannte, geeignete Weise geschätzt, bestimmt oder gemessen werden. So können hierfür beispielsweise Beschleunigungssensoren in der Gondel bzw. dem Turmkopf integriert sein oder auch Dehnungsmessstreifen an beliebigen Stellen des Turms vorgesehen sein.

Die Turmkopf- bzw. Gondelgeschwindigkeit umfasst vorzugsweise die Geschwindigkeitskomponente in Axialrichtung bzw. Längsrichtung der Gondel.

Die absolute Windgeschwindigkeit wird vorzugsweise aus einer scheinbaren Windgeschwindigkeit ermittelt, die durch geeignete, bekannte Weisen geschätzt, bestimmt oder gemessen wird. Hierzu können beispielsweise Anemometer oder Windschätzer, die den Wind aus Betriebsparametern der Windenergieanlage, insbesondere aus Lastern und/oder Leistungen, schätzen, herangezogen werden.

Die absolute Windgeschwindigkeit wird demnach daher erhalten, dass die scheinbare Windgeschwindigkeit mit der Geschwindigkeit, mit der sich das Bezugssystem, insbesondere der Turmkopf der Windenergieanlage, bewegt, kompensiert wird.

Sodann wird einer scheinbaren Windleistung auf den Rotor auf Grundlage der Geschwindigkeit des Turmkopfes und/oder der Gondel sowie der absoluten Windgeschwindigkeit bestimmt.

Vorzugsweise ist die absolute Windgeschwindigkeit von der Geschwindigkeit des Turmkopfes unbeeinflusst und entspricht einer im Bereich der Windenergieanlage bestimmten Windgeschwindigkeit abzüglich der Geschwindigkeit des Turmkopfes und/oder der Gondel der Windenergieanlage.

Vorzugsweise wird die Leistung bzw. das Moment des Rotors um die bzw. das mit einem Faktor multiplizierte aerodynamische Turmschwingungsleistung bzw. Turmschwingungsmoment korrigiert, wobei der Multiplikationsfaktor zwischen 0,5 und 5, vorzugsweise zwischen 1 und 4 beträgt.

Eine optimal entkoppelte Störgröße ist bei einem Multiplikationsfaktor von 1 erreicht, bei einem Wert größer 1 wird die Turmschwingung aktiv gedämpft.

Vorzugsweise ist die Drehzahlregelung dazu ausgebildet, die Windenergieanlage in wenigstens einem vorgebbaren Drehzahlbereich des Teillastbereichs und/oder in einem Übergangsbereich vom Teillastbereich zum Volllastbereich mit einer Überlagerung einer Drehzahlleistungsregelung und einer Pitchregelung auf den Drehzahlsollwert zu regeln, wobei bei der Pitchregelung die Drehzahl durch Verstellen der Rotorzustandsgröße, insbesondere eines Pitchwinkels, auf den Drehzahlsollwert geregelt wird und wobei bei der Drezahlleistungsregelung die Drehzahl durch Verstellen einer einzustellenden Generatorzustandsgröße, insbesondere einer Generatorleistung oder eines Generatormomentes, geregelt wird.

Vorzugsweise liegt der Übergangsbereich im Teillastbereich in einem oberen Drehzahlbereich, der durch Drehzahlen ab einer Übergangsdrehzahl gekennzeichnet ist, wobei der obere Drehzahlbereich insbesondere oberhalb eines Drehzahlvermeidungsbereichs liegt, wobei die Windenergieanlage durch eine Nenndrehzahl gekennzeichnet ist, und die Übergangsdrehzahl wenigstens 80%, insbesondere wenigstens 85% der Nenndrehzahl und/oder einer Solldrehzahl der Pitchregelung beträgt.

Vorzugsweise wird für die Drehzahlleistungsregelung der Drehzahlsollwert über eine Übergangsdrehzahlkennlinie vorgegeben, die die bzw. eine Drehzahlkennlinie bildet, wobei für eine Drehzahl mit einem Drehzahlwert entsprechend der Übergangsdrehzahl die Übergangsdrehzahlkennlinie senkrecht verläuft, so dass mit steigender Generatorzustandsgröße die Drehzahl konstant ist, bis die Generatorzustandsgröße einen vorbestimmten ersten Generatorreferenzwert erreicht, der unterhalb eines Nennwertes der Generatorzustandsgröße liegt, und/oder die Übergangsdrehzahlkennlinie ab der Übergangsdrehzahl und/oder ab dem ersten Generatorreferenzwert eine positive Steigung aufweist, so dass die Werte der Generatorzustandsgröße mit zunehmender Drehzahl zunehmen, bis ein Nennwert der Generatorzustandsgröße erreicht ist.

Vorzugsweise wird der zweite Regelfehler von der Drehzahlleistungsregelung an die Pitchregelung übertragen und die Drehzahlleistungsregelung und die Pitchregelung arbeiten zumindest teilweise parallel und werden über den zweiten Regelfehler aufeinander abgestimmt, und/oder wobei eine Umschaltung oder ein Übergang zwischen der Drehzahlleistungsregelung und der Pitchregelung in Abhängigkeit von dem zweiten Regelfehler erfolgt. Vorzugsweise wird die Drehzahlleistungsregelung gegenüber der Pitchregelung priorisiert, insbesondere so, dass die Pitchregelung ganz oder teilweise unterdrückt wird, solange die Drehzahlleistungsregelung eine Stellgrößenbeschränkung nicht erreicht, und/oder die Pitchregelung die Drehzahl zusätzlich in Abhängigkeit von einem Beschleunigungsistwert des Rotors steuert, und eine Regelung der Drehzahl durch die Pitchregelung umso mehr unterdrückt wird, je weiter bei der Drehzahlleistungsregelung der Generatorsollwert unterhalb einer Generatorsollwertgrenze liegt.

In einem weiteren Aspekt wird eine Reglerstruktur für eine Windenergieanlage nach Anspruch 20 vorgeschlagen, wobei die Windenergieanlage einen aerodynamischen Rotor aufweist, der mit variabler Drehzahl betrieben wird, und der in ihrem Blattwinkel verstellbare Rotorblätter aufweist, wobei die Windenergieanlage in wenigstens einem Betriebsbereich durch eine Drehzahlregelung geregelt wird, bei der die Drehzahl durch Verstellen einer Rotorzustandsgröße der Rotorblätter auf einen Drehzahlsollwert, genannt Solldrehzahl, geregelt wird. Die Reglerstruktur ist dazu ausgebildet, für die Einstellung der Rotorzustandsgröße die Verwendung eines Reservewertes einzuschließen, wobei der Reservewert aus einem Vergleich einer Zielleistung oder eines Zielmoments der Windenergieanlage mit einer Momentanleistung oder einem Momentanmoment der Windenergieanlage für den Fall erhalten wird, dass die Windenergieanlage noch nicht bei der Zielleistung bzw. dem Zielmoment betrieben wird.

Die Reglerstruktur kann mit sämtlichen bevorzugten Ausgestaltungen des beschriebenen Verfahrens zum Steuern einer Windenergieanlage kombiniert werden. Hierbei werden in gleicher Weise die dort beschriebenen Vorteile erreicht.

Die Reglerstruktur ist dazu ausgebildet, dass
- aus einem Vergleich einer vorgegebenen Solldrehzahl mit einer erfassten Istdrehzahl ein erster Regelfehler des Rotors bestimmt wird,
- der erste Regelfehler mit dem Reservewert korrigiert wird, um einen zweiten Regelfehler zu erhalten, und
- aus dem zweiten Regelfehler ein Pitchwinkel oder eine Pitchrate als Sollwert für die Einstellung der Rotorzustandsgröße bestimmt wird.

In einem weiteren Aspekt wird eine Windenergieanlage mit einer Reglerstruktur gemäß der vorliegenden Offenbarung vorgeschlagen.

Die Reglerstruktur kann hierfür beispielsweise die gleichen Komponenten wie eine bekannte Anlagensteuerung einer Windenergieanlage aufweisen, einschließlich einer Recheneinheit wie einem Mikroprozessor und/oder einer CPU sowie geeigneten Speicherkomponenten und Schnittstellen. In diesem Fall unterscheidet sich die Reglerstruktur demnach durch die darauf gespeicherte und/oder ausgeführte Software von den bekannten Steuerungen von Windenergieanlagen. In anderen Ausführungen kann die Umsetzung des Verfahrens auch teilweise oder vollständig durch Hardware erfolgen.

In noch weiteren Ausführungen ist die Steuerung bzw. Reglerstruktur aufgeteilt, wobei sich lediglich ein Teil der Steuerung im räumlichen Bereich der Windenergieanlage, beispielsweise in einer Gondel der Windenergieanlage oder innerhalb eines Turms der Windenergieanlage befindet und weitere Teile der Steuerung auf einer räumlich entfernten Rechnereinheit implementiert sind. Beispielsweise umfasst die entfernte Rechnereinheit einen Server, der über das Internet mit den weiteren Teilen der Steuerung verbunden sind.

In einem weiteren Aspekt wird ein Windpark mit mehreren Windenergieanlagen gemäß der Offenbarung vorgeschlagen.

Der Windpark gemäß diesem Aspekt sowie die Windenergieanlage gemäß dem zuvor beschriebenen Aspekt kann mit sämtlichen bevorzugten Ausgestaltungen des offenbarten Verfahrens kombiniert werden und dabei die gleichen Vorteile erreichen.

Weitere Vorteile und bevorzugte Ausgestaltungen werden nachfolgend mit Verweis auf die beigefügten Figuren beschrieben. Hierbei zeigen:
- Fig. 1: schematisch und exemplarisch eine Windenergieanlage;
- Fig. 2: schematisch und exemplarisch einen Windpark;
- Fig. 3: schematisch und exemplarisch eine Reglerstruktur für Drehzahlregler von Windenergieanlagen,
- Fig. 4: schematisch und exemplarisch ein Diagramm zur Bestimmung eines Reservewertes;
- Fig. 5: schematisch und exemplarisch eine weitere Reglerstruktur,
- Fig. 6: schematisch und exemplarisch eine Reglerstruktur mit Korrektur,
- Fig. 7: schematisch und exemplarisch einen Windschätzer.

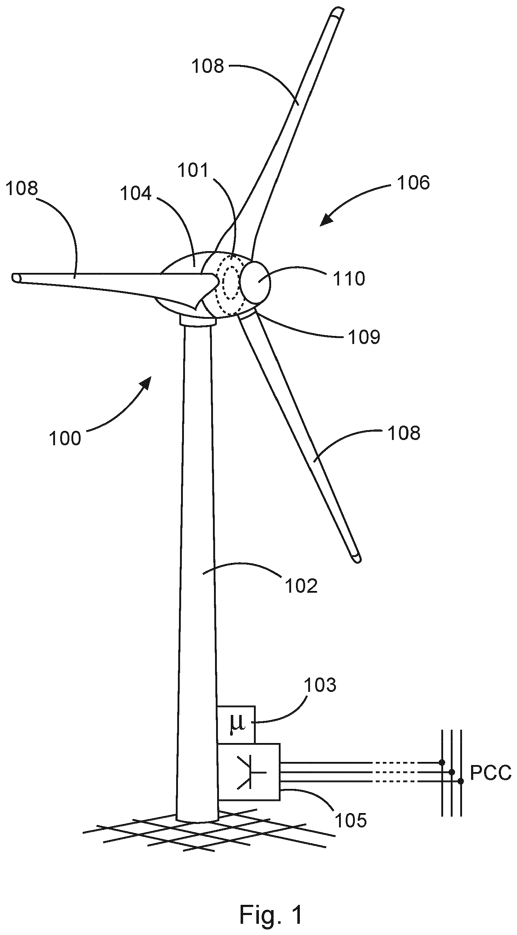

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

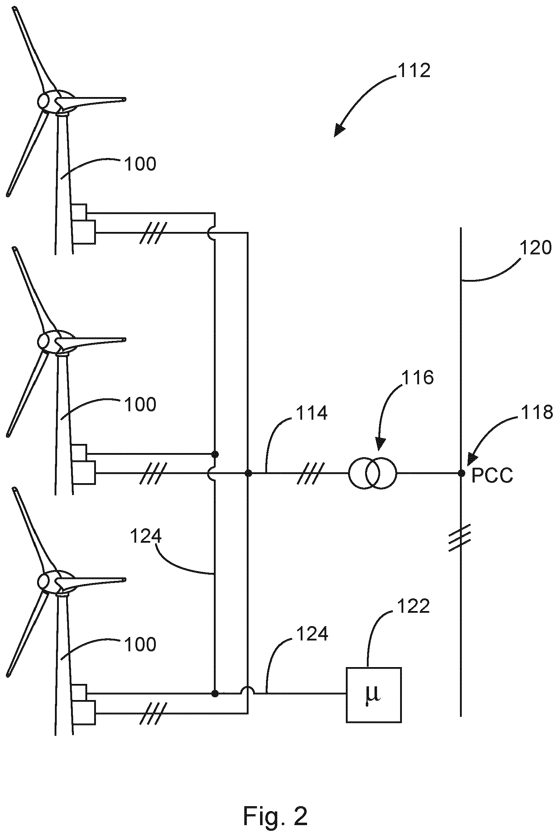

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

Reglerstrukturen zum Betrieb von Windenergieanlagen sind bekannt. Diese sind beispielsweise als Teil der Anlagensteuerung 103 ausgebildet. Am weitesten verbreitet sind sogenannte pitchgesteuerte Windenergieanlagen, bei denen die Rotorblätter des Rotors der Windenergieanlage um ihre Längsachse, die sogenannte Pitchachse, verstellbar sind. Durch die Veränderung des Pitchwinkels wird eine aerodynamische Leistung der Rotorblätter verändert, wodurch eine Beschränkung der Leistung auf Nennleistung bei Erreichen des Nennwindes ermöglicht wird.

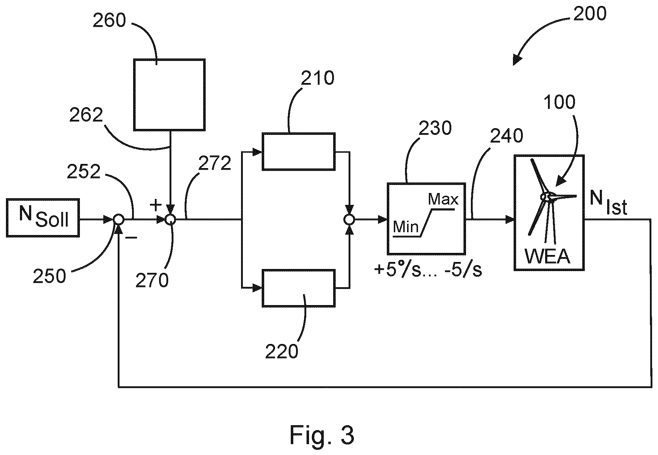

Hierzu ist es bekannt, sogenannte Drehzahlregler, wie sie schematisch in Fig. 3 gezeigt sind, vorzusehen, um eine Solldrehzahl *N_{Soll}* in etwa einzuhalten. Der Drehzahlregler 200 ist dazu ausgebildet, die Solldrehzahl *N_{Soll}* als Führungsgröße nach Möglichkeit einzuregeln, wobei eine von der Windenergieanlage 100 gemessene Ist-Drehzahl *N_{Ist}* zurückgeführt wird und die Abweichung beispielsweise mittels eines P-Reglers 210 und eines D-Reglers 220 in eine einzustellende Pitchrate umgesetzt wird. In anderen Reglern sind auch andere Regelglieder als der P-Regler 210 und der D-Regler 220 vorstellbar. Die Pitchrate wird durch einen Pitchratenbegrenzer 230 begrenzt auf eine Sollpitchrate 240 eingestellt, die dann zum Betrieb der Windenergieanlage 100 verwendet wird. In diesem Fall ist die Sollpitchrate 240 ein Sollwert für die Einstellung der Rotorzustandsgröße.

Die Abweichung der gemessenen Ist-Drehzahl *N_{Ist}* von der Solldrehzahl *N_{Soll}* wird als Ergebnis eines Differenzgliedes 250 erhalten und als erster Regelfehler 252 bezeichnet. Im Unterschied zu bisherigen Drehzahlreglern wird dieser erste Regelfehler 252 in einem Additionsglied 270 mit einem Reservewert 262 korrigiert, so dass ein zweiter Regelfehler 272 resultiert.

Dieser zweite Regelfehler 272 wird dann zur Bestimmung des Sollwertes für die Einstellung der Rotorzustandsgröße, in diesem Beispiel der Sollpitchrate 240, herangezogen.

Der Reservewert 262 wird von einer Reservewertbestimmungseinheit 260 ermittelt, die beispielsweise ebenfalls als Teil der Anlagensteuerung 103 ausgebildet sein kann. Zur Vereinfachung der Darstellung sind die Eingangsschnittstellen der Reservewertbestimmungseinheit 260 in Fig. 3 weggelassen.

In dem Beispiel der Fig. 3 ist also die Einbeziehung des Reservewertes 262 bereits an einer ganz bestimmten Stelle in der Drehzahlregelung 200 gezeigt, nämlich wird hier mittels des Additionsglieds 270 der Reservewert 262 vor dem P-Regler 210 bzw. dem D-Regler 220 einbezogen. Die vorliegende Erfindung ist aber nicht darauf beschränkt und der Reservewert 262 kann an einer beliebigen Stelle der Drehzahlregelung 200 einbezogen sein.

So kann in einem anderen Beispiel die Einbeziehung des Reservewertes 262 lediglich vor oder nach einem der beiden Regelglieder P-Regler 210 bzw. D-Regler 220 erfolgen. Auch kann die Einbeziehung des Reservewertes 262 in anderen Ausführungen bei entsprechender Auslegung des Reservewertes 262 vor bzw. nach dem Pitchratenbegrenzer 230, also auch direkt auf die einzustellende Rotorzustandsgröße wie die Sollpitchrate 240.

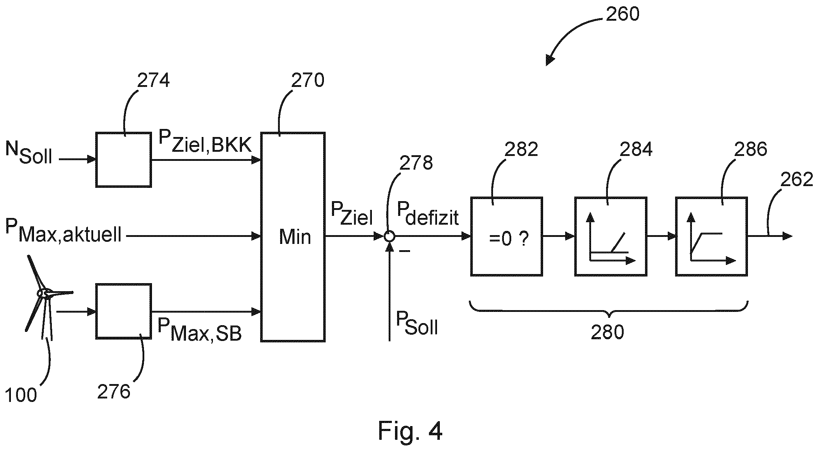

Fig. 4 zeigt schematisch und exemplarisch die Reservewertbestimmungseinheit 260 im Detail. Die Reservewertbestimmungseinheit 260 umfasst eine Zielleistungsbestimmungseinheit 270 und eine Filtereinheit 280 und stellt den Reservewert 262 zur Korrektur des Regelfehlers beispielsweise an die Drehzahlregelung 200 bereit.

Die Zielleistungsbestimmungseinheit 270 ermittelt eine Zielleistung *P_{Ziel},* von der in einem Schritt 278 eine Momentanleistung *P_{Soll}* subtrahiert wird. Als Ergebnis wird eine ungefilterte Reserveleistung, genannt *P_{defizit},* erhalten. Die Momentanleistung ist entweder eine Ist-Leistung wie beispielsweise eine Luftspaltleistung des Generators, eine Leistung am Transformator oder ein dazwischenliegender Leistungswert, oder ein aktuellen Sollwert der Leistungsregelung. Entscheidend ist, dass die Momentanleistung den gleichen Bezugspunkt wie die Zielleistung hat.

Die Zielleistungsbestimmungseinheit 270 ermittelt eine Zielleistung *P_{Ziel}* in diesem Beispiel als geringster Wert aus drei möglichen Zielleistungen *P_{Ziel,BKK}, P_{Max,aktuell}* und *P_{Max,SB}.*

Eine erste Zielleistung *P_{Ziel,BKK}* wird in einer Berechnungseinheit 274 beispielsweise aus der Solldrehzahl *N_{Soll}* anhand einer Betriebskennlinie, insbesondere einer Drehzahl-Leistungskennlinie, erhalten. Hierbei ist zu beachten, dass üblicherweise eine Istdrehzahl herangezogen wird, um anhand der Betriebskennlinie eine Leistung abzuleiten. Es ist also unüblich, eine Solldrehzahl *N_{Soll}* in Verbindung mit der Betriebskennlinie zu bringen, was aber gerade erfindungsgemäß den Vorteil der erhaltenen Zielleistung *P_{Ziel,BKK}* liefert. In anderen Ausführungen kann die erste Zielleistung *P_{Ziel,BKK}* auch aufgrund von Belastungsgrenzen wie strukturellen Belastungsgrenzen beispielsweise des Generators, der Aerodynamik, der Lasten etc. gegeben sein. Sie kann in gewissen Fällen auch über einer Nennleistung der Windenergieanlage liegen, beispielsweise wenn bei kalten Temperaturen auch eine höhere Generatorleistung als die Nennleistung ohne Beschädigung des Generators realisierbar ist.

Eine zweite Zielleistung *P_{Max,aktuell}* eine maximale Leistung bzw. ein maximales Moment, die eine netzseitige Leistungsbegrenzung zulässt. Dieser Wert kann der Windenergieanlage 100 beispielsweise von einem Netzbetreiber bereitgestellt werden. Insbesondere zur Netzstabilisierung kann es hier nötig sein, dass die Windenergieanlage 100 nicht die maximal mögliche Leistung erzeugen darf, die unter den gegebenen Windbedingungen erzeugbar ist.

Schließlich ist eine dritte Zielleistung *P_{Max,SB}* eine maximale Leistung bzw. ein maximales Moment aus einem Sonderbetrieb der Windenergieanlage, insbesondere einem Generatortrocknungsbetrieb und/oder einem Sturmregelungsbetrieb. Damit kann verhindert werden, dass die erfindungsgemäße Bereitstellung des Reservewertes 262 den Betrieb in einem Sonderbetrieb beeinträchtigt oder diesem sogar entgegenwirkt.

Optional wird die ungefilterte Reserveleistung *P_{defizit}* mittels der Filtereinheit 280 gefiltert. Hierfür kann die Filtereinheit 280 eine, mehrere oder alle aus einem Nullsetzer 282, einem Abschwächer 284 und einem Begrenzer 286 in der gezeigten oder einer beliebigen anderen Reihenfolge enthalten.

Der Nullsetzer 282 setzt die Reserveleistung *P_{defizit}* auf 0 wenn die Reserveleistung *P_{defizit}* kleiner als 0, also negativ, ist und/oder der Drehzahlregelfehler, also die Abweichung von Solldrehzahl *N_{Soll}* und Ist-Drehzahl *N_{Ist}* einen vorgegebenen Schwellwert unterschreitet. Der vorgegebene Schwellwert kann beispielsweise 0,5 Umdrehungen pro Minute betragen.

Der Abschwächer 284 implementiert ein Skalieren, insbesondere Abschwächen, des Reservewertes gemäß einer Filterfunktion. Mit dieser Operation kann die Wirkung betragsmäßig großer Reservewerte abgeschwächt werden, was beispielsweise aus Lastgründen vorteilhaft ist.

Der Begrenzer 286 begrenzt den Reservewert auf einen maximalen Reservewert. Auch diese Operation kann aus Lastgründen vorteilhaft sein, da betragsmäßig zu große Reservewerte verhindert werden.

Mit anderen Worten ermöglicht der Reservewert 262 der Windenergieanlage 100 dann, wenn sie noch nicht bei Zielleistung bzw. Zielmoment betrieben wird, die Differenz als zusätzliche Beschleunigungsleistung auszunutzen, um schneller zu beschleunigen. Im Prinzip könnte dies also so ausgedrückt werden, dass die gesamte aufgenommene aerodynamische Leistung der Windenergieanlage 100 geregelt wird, so dass auch von einer *Pₐₑᵣₒ* Regelung gesprochen wird.

Die ungefilterte Reserveleistung *P_{defizit}* ist ebenso wie die gefilterte Reserveleistung ein Beispiel für einen Reservewert 262, wobei analoge Bestimmungen mit Momenten anstelle von Leistungen ebenso vorteilhaft möglich sind.

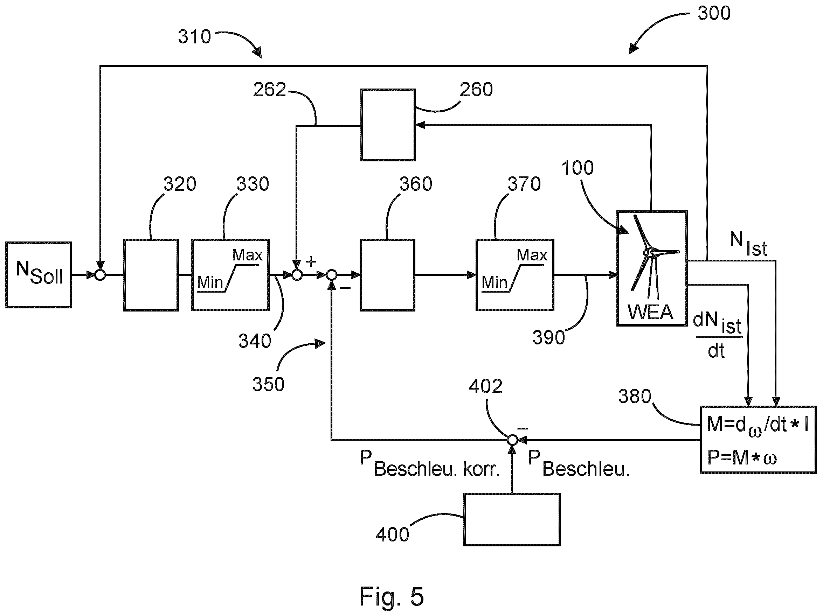

Fig. 5 zeigt schematisch und exemplarisch eine weitere Reglerstruktur 300 für eine Windenergieanlage 100, wie sich beispielsweise in Fig. 1 gezeigt ist. Die Reglerstruktur 300 ist als Kaskadenregelung ausgebildet und weist einen äußeren Regelkreis 310 und einen inneren Regelkreis 350 auf. Die Reglerstruktur 300 regelt eine Drehzahl in der Windenergieanlage auf einen Sollwert *N_{Soll}* . Hierzu vergleicht der äußere Regelkreis 310 die Ist-Drehzahl *N_{Ist}* mit der einzuregelnden Solldrehzahl *N_{Soll}* und erzeugt einen Sollwert 340 der Rotorbeschleunigungsleistung *P_{Beschleu_Soll}* mittels eines durch einen Begrenzer 330 begrenzten Signals eines P-Reglers 320. In diesem Beispiel ist die Rotorbeschleunigungsleistung *P_{Beschleu_Soll}* ein erster Regelfehler des Rotors, der mittels des Reservewertes 262 wie in Fig. 3 und 4 beschrieben korrigiert wird.

Der innere Regelkreis 350 regelt nun auf die Rotorbeschleunigungsleistung *P_{Beschleu_}*und versucht, die Rotorblätter der Windenergieanlage 100 derart zu stellen, dass der Rotor 106 möglichst wenig beschleunigt bzw. dass der Rotor 106 unter Verwendung des Reservewertes beschleunigt. Hierzu wird mittels einer Berechnungseinheit 380 beispielsweise anhand der der zeitlichen Änderung der Rotordrehzahl *dN_{Ist}* / *dt* eine Ist-Beschleunigungsleistung *P_{Beschleu_}*bestimmt.

Der Unterscheid zwischen dem mit dem Reservewert 262 korrigierten Sollwert 340 der Beschleunigungsleistung *P_{Beschleu_Soll}* und dem ermittelten Ist-Wert *P_{Beschleu_}*wird beispielsweise mit einem P-Regler 360 in eine einzustellende Pitchrate bzw. einen einzustellenden Blattwinkel der Rotorblätter 108 umgerechnet. Wie bereits ausgeführt sind natürlich die Pitchrate bzw. der einzustellende Blattwinkel nur Beispiele für eine Rotorzustandsgröße der Rotorblätter.

Durch einen Begrenzer 370 kann die einzustellende Pitchrate bzw. der einzustellende Pitchwinkel begrenzt werden, der dann als Sollwert 390 an die Steuerung der Windenergieanlage 100 übergeben wird.

Die Berechnungseinheit 380 greift in diesem Beispiel auf bekannte physikalische Zusammenhänge zwischen dem für den Rotor bekannten Trägheitsmoment *J*, einem DrehmomentM und Drehzahl bzw. daraus abgeleitet Winkelgeschwindigkeit ω zurück, um aus der Änderung der Drehzahl die Ist-Beschleunigungsleistung *P_{Beschleu_}*zu berechnen.

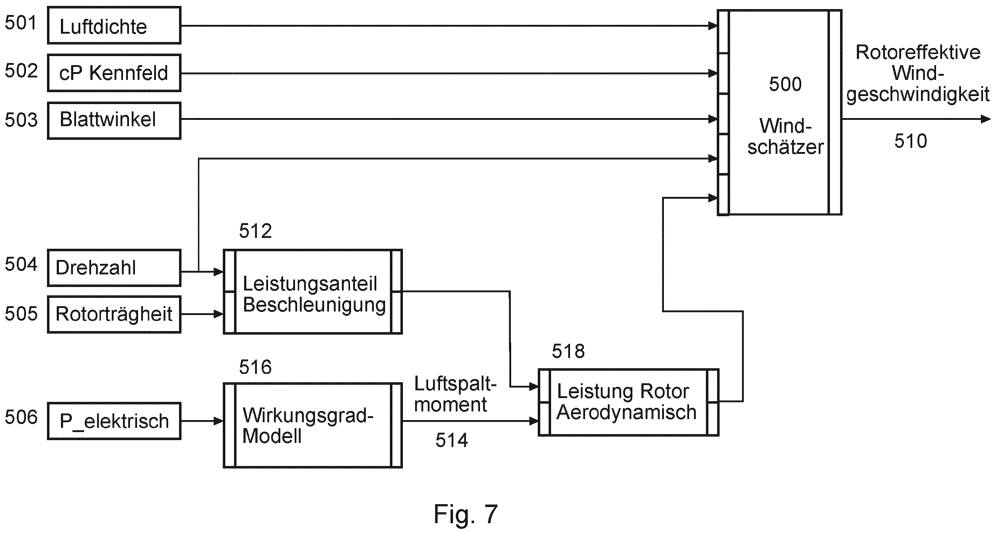

Anstelle der Rotorbeschleunigungsleistung, wie sie in dem Ausführungsbeispiel beschrieben ist, ist auch möglich, die gesamte vom Rotor aufgenommene aerodynamische Leistung, das heißt unter zusätzlicher Betrachtung zu der vom Generator aufgenommenen Leistung, zu verwenden. Ein Vorteil der Rotorbeschleunigungsleistung ist in vielen Fällen, dass die Größe häufig für in Steuerung von Windenergieanlagen 100 eingesetzte Windschätzer üblicherweise bereits zur Verfügung steht, das heißt eine weitergehende Adaption der Steuerung der Windenergieanlage 100 nicht erforderlich ist. Es genügt demnach lediglich den bekannten Drehzahlregler durch eine erfindungsgemäße Reglerstruktur 300 zu ersetzen. Ein Beispiel eines Windschätzers 500 wird mit Verweis auf Fig. 7 beschrieben.

Alternativ zu Leistungen lässt sich die beispielhaft dargelegte Reglerstruktur 300 auch mit Momenten bzw. nach der Zeit abgeleiteten Drehzahlen implementieren. Diese Lösungen sind identisch bis auf den Aspekt, dass die aktuelle Drehzahl in die Beschleunigungsleistung mit eingeht. Es ist allerdings hinreichend bekannt, wie Leistungen in Momente und umgekehrt umzurechnen sind.

Der innere Regelkreis 350 würde für sich alleine genommen mit der Zeit zu starken Drehzahlfehlern führen, so dass der äußere Regelkreis 310, der deutlich langsamer und träger reagiert, einen Sollwert für die Beschleunigungsleistung, der von 0 kW abweichen kann, generiert. Herrscht beispielsweise eine Überdrehzahlsituation vor, das heißt, dass die Ist-Drehzahl *N_{Ist}* größer als die Solldrehzahl *N_{Soll}* ist, wäre der Sollwert 340 beispielsweise -200 kW. Der innere Regelkreis 350 würde in diesem Fall eine ungefähre Rotorbeschleunigungsleistung *P_{Beschleu_}*von -200 kW einregeln, so dass der Rotor 106 im Ergebnis Drehzahl abbaut.

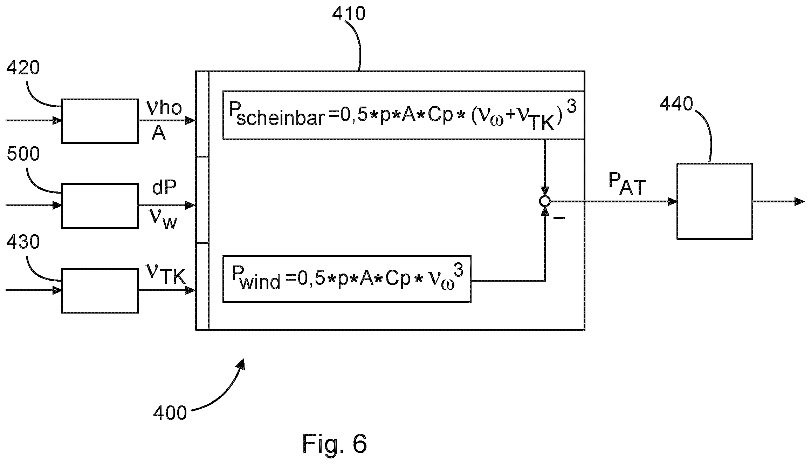

Schließlich wird die Beschleunigungsleistung *P_{Beschleu_}*an einer Stelle 402 um einen von einer Korrekturvorrichtung 400 bereitgestellten Korrekturwert korrigiert, um einen korrigierten Wert der Beschleunigungsleistung *P_{beschl_{korrigiert}}* - analog anwendbar auf Momente - zu erhalten. Die Korrekturvorrichtung 400 wird mit Verweis auf Fig. 6 beschrieben.

Die Begrenzung der Ausgabe des Drehzahlreglers durch die Begrenzer 330 bzw. 370 ermöglicht, dass die maximale Beschleunigungsleistung beschränkt ist, was ebenfalls lastreduzierend wirkt.

Besonders vorteilhaft lässt sich die in Fig. 5 schematisch gezeigte Reglerstruktur 300 daher um eine parallel zu dem inneren Regelkreis 350 angeordnete Vorsteuerung ergänzen. Die Vorsteuerung kann beispielsweise auf sich ankündigende Böen vorsteuern und demnach in Ergänzung zu der Regelung aktiv in die Pitchwinkelansteuerung eingreifen. Damit können besonders wirksam auftretende Extremlasten, wie sie die Folge von starken Böen sind, vermieden werden.

Zusammengefasst ist die Reglerstruktur 300 zum Regeln der Drehzahl auf einen Drehzahlsollwert *N_{Soll}* ausgebildet. Der innere Regelkreis 350 erhält die vom Rotor 106 aufgenommene aerodynamische Leistung bzw. die Beschleunigungsleistung oder vereinfacht auch lediglich die Rotorbeschleunigung als Regelgröße, wobei die Pitchrate oder alternativ auch ein Sollrotorblattwinkel oder andere Rotorzustandsgrößen als Stellgröße dient. Der äußere Regelkreis 310 regelt als Regelgröße die Rotordrehzahl *N*, wobei ein Sollwert der aerodynamischen Leistung, der Beschleunigungsleistung oder auch der Sollrotorbeschleunigung als Stellgröße für den inneren Regelkreis 350 generiert werden.

Auch in dem Beispiel der Fig. 5 ist also die Einbeziehung des Reservewertes 262 bereits an einer ganz bestimmten Stelle in der Drehzahlregelung 300 gezeigt. Auch mit Blick auf diese Ausführung der Drehzahlregelung 300 wird explizit darauf hingewiesen, dass die Einbeziehung des Reservewertes 262 nicht auf die gezeigte Form beschränkt ist und der Reservewert 262 analog zu der Drehzahlregelung 200 an einer beliebigen Stelle der Drehzahlregelung 300 einbezogen sein kann.

Fig. 6 zeigt die Korrekturvorrichtung 400, die einen Korrekturwert der Beschleunigungsleistung *P_{Beschleu_}*an einer Stelle 402 in den inneren Regelkreis 350 der Fig. 5 integriert. Das Ergebnis ist demnach ein Korrekturwert 402 der Beschleunigungsleistung *P_{Beschleu_}*, wobei das Verfahren ebenso analog auf Momente anwendbar ist.

Der Korrekturwert 402 entspricht physikalisch einer aerodynamischen Leistung, die aus der Schwingung des Turms der Windenergieanlage 100 stammt, genannt aerodynamische Turmschwingungsleistung *P_{AT}* . Zu diesem Zweck wird mittels einer Berechnungseinheit 410 eine scheinbare Windleistung *P_{sche}i_{nbar}* und eine reine Windleistung *P_{wind},* beispielsweise mittels der folgenden Formeln berechnet: ${P}_{Scheinbar} = 0 , 5 ∗ ρ ∗ A ∗ {c}_{P} ∗ {\left({v}_{W}+{v}_{TK}\right)}^{3}$ (1) ${P}_{Wind} = 0 , 5 ∗ ρ ∗ A ∗ {c}_{P} ∗ {v}_{w}^{3}$ (2) ${P}_{AT} = {P}_{Scheinbar} - {P}_{Wind}$ (3)

Als Eingangsgrößen der Berechnungseinheit 410 dienen zunächst von einer Parametereinheit 420 bereitgestellte Parameter der Windenergieanlage wie eine Luftdichte *ρ* und eine Rotorfläche A. Ein Turmkopfgeschwindigkeitsschätzung 430 stellt die Turmkopfgeschwindigkeit *v_{TK}* bereit. Diese wird beispielsweise über einen Bescheinigungssensor, der im Turmkopf oder an der Gondel befestigt ist, bestimmt. Auch andere Verfahren zum Schätzen der Turmkopfgeschwindigkeit, beispielsweise über Dehnungsmeßstreifen, die am Turmfuß oder im Turm angeordnet sind, sind bekannt.

Schließlich wird eine Windgeschwindigkeit *v_{w}*, die keine Einflüsse der Turmkopfgeschwindigkeit aufweist, durch einen Windschätzer 500 bereitgestellt. Der Windschätzer 500 wird später mit Verweis auf Fig. 7 im Detail beschrieben. Anstelle Windschätzer 500 eignen sich auch andere Verfahren zur Bereitstellung einer Windgeschwindigkeit *v_{w}*, beispielsweise auf Anemometern oder ähnlichen Meßvorrichtungen basierende Verfahren. Die von dem Windschätzer 500 bereitgestellte Windgeschwindigkeit *v_{w}* wird entweder unmittelbar ohne den Einfluss der Turmkopfgeschwindigkeit ermittelt oder, alternativ, wird die Turmkopfgeschwindigkeit *v_{TK}* nachträglich aus der Windgeschwindigkeit *v_{w}* herausgerechnet.

Die Berechnungseinheit 410 bestimmt dann die scheinbare Windleistung *P_{scheinbar}* aus einer Differenz der Windgeschwindigkeit *v_{w}* und der Turmkopfgeschwindigkeit *v_{TK}.* Zusätzlich wird die reine Windleistung *P_{wind}* ausschließlich aus der Windgeschwindigkeit *v_{w}* bestimmt.

Die Differenz beider Leistungen wird von der Berechnungseinheit 410 dann als aerodynamische Turmschwingungsleistung *P_{AT}* . gebildet. Die aerodynamische Turmschwingungsleistung *P_{AT}* . 412 wird an einen Multiplikator 440 übergeben, der je nach Multiplikationsfaktor eine *P_{AT}* -Kompensation (Multiplikationsfaktor gleich 1) oder eine *P_{AT}* -Überkompensation (Modifikationsfaktor größer 1, vorzugsweise zwischen 1 und 4) ermöglicht. Bei der *P_{AT}* -Kompensation handelt sich um eine reine Störgrößenentkopplung, während bei der *P_{AT}* -Überkompensation eine Dämpfung der *P_{AT}* erfolgt.

Dem inneren Regelkreis 530 wird demnach eine um die Ausgabe des Multiplikator 440 verringerte Beschleunigungsleistung *P_{beschl_{korrigiert}}* als Regelgröße zugeführt.

Die Berechnungseinheit 410 und die weiteren Einheiten 420, 430, 500 können in ein und derselben Berechnungsvorrichtung, wie die Berechnungseinheit 380 integriert sein. Beispielsweise kann ein zentraler Rechner der Windenergieanlage 100 sämtliche der Funktionen übernehmen. Alternativ können auch eine, mehrere oder alle der Funktionen auf mehrere Rechnungseinheiten aufgeteilt werden. Auch ist es ebenso möglich, die Berechnungen teilweise oder sogar vollständig auf von der Windenergieanlage 100 entfernt angeordneten Vorrichtungen auszuführen. Beispielsweise können hierfür Server oder ähnliche Strukturen geeignet sein.

Fig. 7 zeigt schematisch und exemplarisch einen Windschätzer 500. Der Windschätzer 500 verarbeitet unterschiedliche Eingangsgrößen, um eine rotoreffektive Windgeschwindigkeit 510 zu erhalten.

Zunächst erhält der Windschätzer 500 eine Luftdichte 501, ein cP-Kennfeld 502 und einen aktuell anliegenden Blattwinkel der Rotorblätter 503.

Als weitere Parameter fließen eine Drehzahl 504, eine Rotorträgheit 505 und die elektrische Leistung 506 in den Windschätzer 500 ein. Die Drehzahl 504 sowie die Rotorträgheit 505 werden in einen Leistungsanteil für die Beschleunigung 512 umgerechnet und mit einem Luftspaltmoment 514, das mittels eines Wirkungsgradmodells 516 aus der elektrischen Leistung 506 abgeleitet wurde, zu der aerodynamischen Leistung des Rotors 518 zusammengefasst.

## Patentansprüche

1. Verfahren zum Steuern einer Windenergieanlage (100), wobei die Windenergieanlage (100) einen aerodynamischen Rotor (106) aufweist, der mit variabler Drehzahl betrieben wird, und der in ihrem Blattwinkel verstellbare Rotorblätter (108) aufweist, wobei die Windenergieanlage (100) in wenigstens einem Betriebsbereich durch eine Drehzahlregelung geregelt wird, bei der die Drehzahl durch Verstellen einer Rotorzustandsgröße der Rotorblätter (108) auf einen Drehzahlsollwert, genannt Solldrehzahl, geregelt wird, wobei
die Drehzahlregelung für die Einstellung der Rotorzustandsgröße die Verwendung eines Reservewertes (262) einschließt, wobei der Reservewert aus einem Vergleich einer Zielleistung oder eines Zielmoments der Windenergieanlage mit einer Momentanleistung oder einem Momentanmoment der Windenergieanlage für den Fall erhalten wird, dass die Windenergieanlage noch nicht bei der Zielleistung bzw. dem Zielmoment betrieben wird, wobei
die Drehzahlregelung so erfolgt, dass
- aus einem Vergleich einer vorgegebenen Solldrehzahl (N_{Soll}) mit einer erfassten Istdrehzahl (N_{Ist}) ein erster Regelfehler des Rotors bestimmt wird,
- der erste Regelfehler mit dem Reservewert korrigiert wird, um einen zweiten Regelfehler zu erhalten, und
- aus dem zweiten Regelfehler ein Pitchwinkel oder eine Pitchrate als Sollwert für die Einstellung der Rotorzustandsgröße bestimmt wird, wobei
- der erste Regelfehler einen ersten Beschleunigungssollwert und der zweite Regelfehler einen zweiten Beschleunigungssollwert umfasst,
- der zweite Beschleunigungssollwert mit einem Beschleunigungsistwert des Rotors verglichen wird, um einen Pitchwinkel oder eine Pitchrate als Sollwert für die Einstellung der Rotorzustandsgröße zu bestimmen,
- der erste Beschleunigungssollwert, der zweite Beschleunigungssollwert und der Beschleunigungsistwert jeweils als eine Beschleunigungsleistung und/oder ein Beschleunigungsmoment ausgebildet sind, wobei
- die Beschleunigungsleistung einer Rotorbeschleunigung zugeordnet ist und eine Leistung beschreibt, die erforderlich ist, die Rotorbeschleunigung hervorzurufen und/oder
- das Beschleunigungsmoment einer Rotorbeschleunigung zugeordnet ist und ein Moment beschreibt, das erforderlich ist, die Rotorbeschleunigung hervorzurufen.

2. Verfahren nach Anspruch 1, wobei die Zielleistung bzw. das Zielmoment als der geringste Wert der folgenden Werte bestimmt wird:
- eine maximale Leistung bzw. ein maximales Moment der Windenergieanlage,
- eine maximale Leistung bzw. ein maximales Moment, die eine netzseitige Leistungsbegrenzung zulässt, und
- eine maximale Leistung bzw. ein maximales Moment aus einem Sonderbetrieb der Windenergieanlage, insbesondere einem Generatortrocknungsbetrieb und/oder einem Sturmregelungsbetrieb.

3. Verfahren nach einem der vorstehenden Ansprüche, wobei auf dem Reservewert vor der Einbeziehung in die Drehzahlregelung wenigstens eine, vorzugsweise mehrere und besonders bevorzugt sämtliche der nachfolgenden Operationen ausgeführt werden:
- Nullsetzen des Reservewertes für den Fall, dass eine Abweichung der Solldrehzahl von der erfassten Istdrehzahl einen Schwellenwert unterschreitet;
- Nullsetzen des Reservewertes für den Fall, dass der Reservewert negativ ist;
- Skalieren, insbesondere Abschwächen, des Reservewertes gemäß einer Filterfunktion;
- Begrenzen des Reservewertes auf einen maximalen Reservewert.

4. Verfahren nach einem der vorstehenden Ansprüche, wobei der erste Regelfehler vor Korrektur mit dem Reservewert mittels wenigstens eines Regelfehlergrenzwertes auf einen zulässigen Bereich von Regelfehlern beschränkt wird.

5. Verfahren nach Anspruch 4, wobei der wenigstens eine Regelfehlergrenzwert einstellbar ist und/oder als der wenigstens eine Regelfehlergrenzwert ein oberer und ein unterer Regelfehlergrenzwert mit unterschiedlichen Werten vorgesehen sind.

6. Verfahren nach einem der vorstehenden Ansprüche, wobei der erste Regelfehler basierend auf einer Drehzahländerung, einer Drehzahlbeschleunigung, einer Funktion der Drehzahländerung und/oder einer Funktion der Drehzahlbeschleunigung bestimmt wird.

7. Verfahren nach einem der vorstehenden Ansprüche, wobei die Drehzahlregelung eine äußere Kaskade enthaltend einen ersten Regler und eine innere Kaskade enthaltend einen zweiten Regler aufweist, wobei der zweite Regler insbesondere einen mit dem Reservewert korrigierten Regelfehler als Führungsgröße enthält.

8. Verfahren nach Anspruch 7, wobei der Regelfehler des zweiten Reglers einen Beschleunigungssollwert des Rotors umfasst.

9. Verfahren nach einem der Ansprüche 7 oder 8, wobei die innere Kaskade, insbesondere der zweite Regler, zum Bestimmen einer bzw. der Stellgröße zum Einstellen der Rotorzustandsgröße
- ein Integralglied mit einer Integratorbegrenzung aufweist, und optional
- die Integratorbegrenzung einstellbar ist und/oder
- unterschiedliche obere und untere Grenzwerte aufweist.

10. Verfahren nach einem der vorstehenden Ansprüche 7, 8 oder 9, wobei
ein Rückführungssignal zum zweiten Regler eine von dem Rotor (106) aufgenommene aerodynamische Leistung umfasst, wobei
die von dem Rotor (106) aufgenommene aerodynamische Leistung eine Summe aus einer Rotorbeschleunigungsleistung und wenigstens einer von einer weiteren Komponente der Windenergieanlage (100) aufgenommenen Leistung, insbesondere einer Generatorleistung eines Generators der Windenergieanlage (100), umfasst, wobei
die Rotorbeschleunigungsleistung den Teil einer von dem Rotor (106) der Windenergieanlage (100) aufgenommenen Leistung beschreibt, der in eine Beschleunigung des Rotors (106) umgewandelt wird.

11. Verfahren nach Anspruch 10, das weiter aufweist:
- Bestimmen einer aerodynamischen Turmschwingungsleistung bzw. eines aerodynamischen Turmschwingungsmoments,
- Korrigieren der Rotorbeschleunigungsleistung unter Verwendung der aerodynamischen Turmschwingungsleistung bzw. des aerodynamischen Turmschwingungsmoments.

12. Verfahren nach Anspruch 11, wobei das Bestimmen der aerodynamischen Turmschwingungsleistung bzw. des aerodynamischen Turmschwingungsmomentes umfasst:
- Bestimmen einer absoluten Windgeschwindigkeit im Bereich der Windenergieanlage,
- Bestimmen einer reinen Windleistung auf den Rotor auf Grundlage der absoluten Windgeschwindigkeit,
- Bestimmen einer scheinbaren Windleistung bzw. eines scheinbaren Windmoments auf den Rotor auf Grundlage der Geschwindigkeit des Turmkopfes und/oder der Gondel;
- Bestimmen der aerodynamischen Turmschwingungsleistung bzw. des aerodynamischen Turmschwingungsmoments auf Grundlage einer Differenz der scheinbaren Windleistung und der reinen Windleistung.

13. Verfahren nach Anspruch 12, wobei die absolute Windgeschwindigkeit von der Geschwindigkeit des Turmkopfes unbeeinflusst ist und einer im Bereich der Windenergieanlage (100) bestimmten Windgeschwindigkeit abzüglich der Geschwindigkeit des Turmkopfes und/oder der Gondel der Windenergieanlage entspricht.

14. Verfahren nach einem der vorstehenden Ansprüche 12 oder 13, wobei die Leistung bzw. das Moment des Rotors um die bzw. das mit einem Faktor multiplizierte aerodynamische Turmschwingungsleistung bzw. Turmschwingungsmoment korrigiert wird, wobei der Multiplikationsfaktor zwischen 0,5 und 5, vorzugsweise zwischen 1 und 4 beträgt.

15. Verfahren nach einem der vorstehenden Ansprüche, wobei die Drehzahlregelung dazu ausgebildet ist, die Windenergieanlage in wenigstens einem vorgebbaren Drehzahlbereich des Teillastbereichs und/oder in einem Übergangsbereich vom Teillastbereich zum Volllastbereich mit einer Überlagerung einer Drehzahlleistungsregelung und einer Pitchregelung auf den Drehzahlsollwert zu regeln, wobei
bei der Pitchregelung die Drehzahl durch Verstellen der Rotorzustandsgröße, insbesondere eines Pitchwinkels, auf den Drehzahlsollwert geregelt wird und wobei
bei der Drezahlleistungsregelung die Drehzahl durch Verstellen einer einzustellenden Generatorzustandsgröße, insbesondere einer Generatorleistung oder eines Generatormomentes, geregelt wird.

16. Verfahren nach Anspruch 15, wobei
der Übergangsbereich im Teillastbereich in einem oberen Drehzahlbereich liegt, der durch Drehzahlen ab einer Übergangsdrehzahl gekennzeichnet ist, wobei der obere Drehzahlbereich insbesondere oberhalb eines Drehzahlvermeidungsbereichs liegt, wobei
die Windenergieanlage durch eine Nenndrehzahl gekennzeichnet ist, und die Übergangsdrehzahl wenigstens 80%, insbesondere wenigstens 85% der Nenndrehzahl und/oder einer Solldrehzahl der Pitchregelung beträgt.

17. Verfahren nach Anspruch 16, wobei
für die Drehzahlleistungsregelung der Drehzahlsollwert über eine Übergangsdrehzahlkennlinie vorgegeben wird, die die bzw. eine Drehzahlkennlinie bildet, wobei
für eine Drehzahl mit einem Drehzahlwert entsprechend der Übergangsdrehzahl die Übergangsdrehzahlkennlinie senkrecht verläuft, so dass mit steigender Generatorzustandsgröße die Drehzahl konstant ist, bis die Generatorzustandsgröße einen vorbestimmten ersten Generatorreferenzwert erreicht, der unterhalb eines Nennwertes der Generatorzustandsgröße liegt, und/oder die Übergangsdrehzahlkennlinie ab der Übergangsdrehzahl und/oder ab dem ersten Generatorreferenzwert eine positive Steigung aufweist, so dass die Werte der Generatorzustandsgröße mit zunehmender Drehzahl zunehmen, bis ein Nennwert der Generatorzustandsgröße erreicht ist.

18. Verfahren nach einem der vorstehenden Ansprüche 15 bis 17, wobei
der zweite Regelfehler von der Drehzahlleistungsregelung an die Pitchregelung übertragen wird und die Drehzahlleistungsregelung und die Pitchregelung zumindest teilweise parallel arbeiten und über den zweiten Regelfehler aufeinander abgestimmt werden, und/oder eine Umschaltung oder ein Übergang zwischen der Drehzahlleistungsregelung und der Pitchregelung in Abhängigkeit von dem zweiten Regelfehler erfolgt.

19. Verfahren nach einem der vorstehenden Ansprüche 15 bis 18, wobei
die Drehzahlleistungsregelung gegenüber der Pitchregelung priorisiert wird, insbesondere so, dass die Pitchregelung ganz oder teilweise unterdrückt wird, solange die Drehzahlleistungsregelung eine Stellgrößenbeschränkung nicht erreicht, und/oder die Pitchregelung die Drehzahl zusätzlich in Abhängigkeit von einem Beschleunigungsistwert des Rotors steuert, und eine Regelung der Drehzahl durch die Pitchregelung umso mehr unterdrückt wird, je weiter bei der Drehzahlleistungsregelung der Generatorsollwert unterhalb einer Generatorsollwertgrenze liegt.

20. Reglerstruktur für eine Windenergieanlage (100), wobei die Windenergieanlage (100) einen aerodynamischen Rotor (106) aufweist, der mit variabler Drehzahl betrieben wird, und der in ihrem Blattwinkel verstellbare Rotorblätter (108) aufweist, wobei die Windenergieanlage (100) in wenigstens einem Betriebsbereich durch eine Drehzahlregelung geregelt wird, bei der die Drehzahl durch Verstellen einer Rotorzustandsgröße der Rotorblätter (108) auf einen Drehzahlsollwert, genannt Solldrehzahl, geregelt wird, wobei
die Reglerstruktur dazu ausgebildet ist, für die Einstellung der Rotorzustandsgröße die Verwendung eines Reservewertes (262) einzuschließen, wobei der Reservewert aus einem Vergleich einer Zielleistung oder eines Zielmoments der Windenergieanlage mit einer Momentanleistung oder einem Momentanmoment der Windenergieanlage für den Fall erhalten wird, dass die Windenergieanlage noch nicht bei der Zielleistung bzw. dem Zielmoment betrieben wird, wobei die Reglerstruktur dazu ausgebildet ist, dass
- aus einem Vergleich einer vorgegebenen Solldrehzahl (N_{Soll}) mit einer erfassten Istdrehzahl (N_{Ist}) ein erster Regelfehler des Rotors bestimmt wird,
- der erste Regelfehler mit dem Reservewert korrigiert wird, um einen zweiten Regelfehler zu erhalten, und
- aus dem zweiten Regelfehler ein Pitchwinkel oder eine Pitchrate als Sollwert für die Einstellung der Rotorzustandsgröße bestimmt wird, wobei
- der erste Regelfehler einen ersten Beschleunigungssollwert und der zweite Regelfehler einen zweiten Beschleunigungssollwert umfasst,
- der zweite Beschleunigungssollwert mit einem Beschleunigungsistwert des Rotors verglichen wird, um einen Pitchwinkel oder eine Pitchrate als Sollwert für die Einstellung der Rotorzustandsgröße zu bestimmen,
- der erste Beschleunigungssollwert, der zweite Beschleunigungssollwert und der Beschleunigungsistwert jeweils als eine Beschleunigungsleistung und/oder ein Beschleunigungsmoment ausgebildet sind, wobei
- die Beschleunigungsleistung einer Rotorbeschleunigung zugeordnet ist und eine Leistung beschreibt, die erforderlich ist, die Rotorbeschleunigung hervorzurufen und/oder
- das Beschleunigungsmoment einer Rotorbeschleunigung zugeordnet ist und ein Moment beschreibt, das erforderlich ist, die Rotorbeschleunigung hervorzurufen.

21. Windenergieanlage (100) mit einer Reglerstruktur nach Anspruch 20.

22. Windpark mit mehreren Windenergieanlagen nach Anspruch 21.

## Claims

1. Method for controlling a wind power installation (100), wherein the wind power installation (100) has an aerodynamic rotor (106) which is operated at a variable rotating speed and which has rotor blades (108) that are adjustable in terms of the blade angles thereof, wherein the wind power installation (100) in at least one operating range is closed-loop controlled by a closed-loop rotating speed control in which the rotating speed by adjusting a rotor status variable of the rotor blades (108) is closed-loop controlled to a rotating speed target value, referred to as the target rotating speed, wherein
the closed-loop rotating speed control for adjusting the rotor status variable includes the use of a reserve value (262), wherein
the reserve value, in the event that the wind power installation is not yet operating at a target output, or a target moment, respectively, is obtained from a comparison of the target output or the target moment of the wind power installation and a momentary output or a momentary moment of the wind power installation, wherein
the closed-loop rotating speed control takes place such that
- a first control error of the rotor is determined from a comparison of a predefined target rotating speed (Nₙₒₘ) and a detected actual rotating speed (N_{actual}),
- the first control error is corrected using the reserve value so as to obtain a second control error, and
- a pitch angle or a pitch rate as the target value for adjusting the rotor status variable is determined from the second control error, wherein
- the first control error comprises a first acceleration target value, and the second control error comprises a second acceleration target value, and
- the second acceleration target value is compared with an acceleration actual value of the rotor so as to determine a pitch angle or a pitch rate as the target value for the adjustment of the rotor status variable,
- the first acceleration target value, the second acceleration target value and the acceleration actual value are in each case configured as an acceleration output and/or an acceleration moment, wherein
- the acceleration output is assigned to a rotor acceleration and describes an output that is required to initiate the rotor acceleration, and/or
- the acceleration moment is assigned to a rotor acceleration and describes a moment that is required to initiate the rotor acceleration.

2. Method according claim 1, wherein the target output, or the target moment, respectively, is determined as the lowest value of the following values:
- a maximum output, or a maximum moment, respectively, of the wind power installation;
- a maximum output, or a maximum moment, respectively, which is permitted by the output limitation of the grid; and
- a maximum output, or a maximum moment, respectively, from a special operation of the wind power installation, in particular from a generator drying operation and/or a closed-loop controlled storm operation.

3. Method according to one of the preceding claims, wherein at least one, preferably a plurality, and particularly preferably all, of the following operations are carried out based on the reserve value prior to the latter being included in the closed-loop rotating speed control:
- setting the reserve value to zero in the event that a deviation of the target rotating speed from the detected actual rotating speed undershoots a threshold value;
- setting the reserve value to zero in the event that the reserve value is negative;
- scaling, in particular mitigating, the reserve value according to a filter function;
- delimiting the reserve value to a maximum reserve value.

4. Method according to one of the preceding claims, wherein the first control error, prior to the correction using the reserve value, by means of at least one control error limit value is restricted to a permissible range of control errors.

5. Method according to claim 4, wherein the at least one control error limit value is adjustable, and/or an upper and a lower control error limit value having dissimilar values are provided as the at least one control error limit value.

6. Method according to one of the preceding claims, wherein the first control error is determined so as to be based on a rotating speed variation, a rotating speed acceleration, a function of the rotating speed variation and/or a function of the rotating speed acceleration.

7. Method according to one of the preceding claims, wherein the closed-loop rotating speed control has an outer cascade, containing a first closed-loop controller, and an inner cascade, containing a second closed-loop controller, wherein the second closed-loop controller as a reference variable contains in particular a control error that has been corrected using the reserve value.

8. Method according to claim 7, wherein the control error of the second closed-loop controller comprises an acceleration target value of the rotor.

9. Method according to one of claims 7 or 8, wherein the inner cascade, in particular the second closed-loop controller, for determining a, or the, actuating variable for adjusting the rotor status variable
- has an integral element having an integrator delimitation, and optionally
- the integrator delimitation is adjustable and/or
- has dissimilar upper and lower limit values.

10. Method according to one of preceding claims 7, 8 or 9, wherein
a feedback signal to the second closed-loop controller comprises an aerodynamic output received by the rotor (106), wherein
the aerodynamic output received by the rotor (106) comprises a sum of a rotor acceleration output and at least one output received by a further component of the wind power installation (100), in particular a generator output of a generator of the wind power installation (100), wherein
the rotor acceleration output describes that part of an output received by the rotor (106) of the wind power installation (100) that is converted into an acceleration of the rotor (106).

11. Method according to claim 10, said method further comprising:
- determining an aerodynamic tower vibratory output, or an aerodynamic tower vibratory moment, respectively,
- correcting the rotor acceleration output while using the aerodynamic tower vibratory output, or the aerodynamic tower vibratory moment, respectively.

12. Method according to claim 11, wherein the determination of the aerodynamic tower vibratory output, or the aerodynamic tower vibratory moment, respectively, comprises:
- determining an absolute wind speed in the region of the wind power installation;
- determining a net wind output on the rotor based on the absolute wind speed;
- determining an apparent wind output, or an apparent wind moment, respectively, on the rotor based on the speed of the tower head and/or of the nacelle;
- determining the aerodynamic tower vibratory output, or the aerodynamic tower vibratory moment, respectively, based on a difference between the apparent wind output and the net wind output.

13. Method according to claim 12, wherein the absolute wind speed is not influenced by the speed of the tower head and corresponds to a wind speed determined in the region of the wind power installation (100) minus the speed of the tower head and/or of the nacelle of the wind power installation.

14. Method according to one of preceding claims 12 or 13, wherein the output, or the moment, respectively, of the rotor is corrected by the aerodynamic tower vibratory output or the tower vibratory moment, respectively, multiplied by a factor, wherein the multiplication factor is between 0.5 and 5, preferably between 1 and 4.

15. Method according to one of the preceding claims, wherein the closed-loop rotating speed control is configured to control the wind power installation in at least one predefinable rotating speed range of the partial-load operating range and/or in a transition range from the partial-load operating range to the full-load operating range to the rotating speed target value by way of superimposing a closed-loop rotating speed output control and a closed-loop pitch control, wherein
the rotating speed in the case of the closed-loop pitch control is closed-loop controlled to the rotating speed target value by adjusting the rotor status variable, in particular a pitch angle, and wherein
the rotating speed in the case of the closed-loop rotating speed output control is closed-loop controlled by adjusting a generator status variable to be adjusted, in particular a generator output or a generator moment.

16. Method according to claim 15, wherein
the transition range in the partial-load operating range lies in an upper rotating speed range that is **characterized by** rotating speeds exceeding a transitional rotating speed, wherein the upper rotating speed range lies in particular above a rotating speed avoidance range, wherein
the wind power installation is **characterized by** a nominal rotating speed, and the transitional rotating speed is at least 80%, in particular at least 85%, of the nominal rotating speed and/or a target rotating speed of the closed-loop pitch control.

17. Method according to claim 16, wherein
for the closed-loop rotating speed output control the rotating speed target value is predefined by way of a transitional rotating speed characteristic curve which forms the, or a, rotating speed characteristic curve, wherein
for a rotating speed having a rotating speed value corresponding to the transitional rotating speed the transitional rotating speed characteristic curve runs vertically so that the rotating speed is constant as the generator status variable increases until the generator status variable reaches a predetermined first generator reference value which lies below a nominal value of the generator status variable, and/or the transitional rotating speed characteristic curve as from the transitional rotating speed and/or as from the first generator reference value has a positive gradient so that the values of the generator status variable increase as the rotating speed increases until a nominal value of the generator status variable is reached.

18. Method according to one of preceding claims 15 to 17, wherein
the second control error is transmitted from the closed-loop rotating speed output control to the closed-loop pitch control, and the closed-loop rotating speed output control and the closed-loop pitch control operate at least partially in parallel and are mutually adapted by way of the second control error, and/or a switchover or a transition between the closed-loop rotating speed output control and the closed-loop pitch control takes places as a function of the second control error.

19. Method according to one of preceding claims 15 to 18, wherein
the closed-loop rotating speed output control is prioritized in relation to the closed-loop pitch control, in particular such that the closed-loop pitch control is completely or partially suppressed as long as the closed-loop rotating speed output control does not reach an actuating variable limitation, and/or the closed-loop pitch control additionally controls the rotating speed as a function of an acceleration actual value of the rotor, and control of the rotating speed by the closed-loop pitch control is increasingly suppressed the more the generator target value in the closed-loop rotating speed output control lies below a generator target value limit.

20. Closed-loop controller structure for a wind power installation (100), wherein the wind power installation (100) has an aerodynamic rotor (106) which is operated at a variable rotating speed and which has rotor blades (108) which are adjustable in terms of the blade angles thereof, wherein the wind power installation (100) in at least one operating range is closed-loop controlled by a closed-loop rotating speed control in which the rotating speed by adjusting a rotor status variable of the rotor blades (108) is closed-loop controlled to a rotating speed target value, referred to as the target rotating speed, wherein
the closed-loop controller structure for adjusting the rotor status variable is configured to include the use of a reserve value (262), wherein
the reserve value, in the event that the wind power installation is not yet operating at a target output, or a target moment, respectively, is obtained from a comparison of the target output or the target moment of the wind power installation and a momentary output or a momentary moment of the wind power installation, wherein the closed-loop controller structure is configured such that
- a first control error of the rotor is determined from a comparison of a predefined target rotating speed (Nₙₒₘ) and a detected actual rotating speed (N_{actual}),
- the first control error is corrected using the reserve value so as to obtain a second control error, and
- a pitch angle or a pitch rate as the target value for adjusting the rotor status variable is determined from the second control error wherein
the closed-loop rotating speed control takes place such that
- a first control error of the rotor is determined from a comparison of a predefined target rotating speed and a detected actual rotating speed,
- the first control error is corrected using the reserve value so as to obtain a second control error, and
- a pitch angle or a pitch rate as the target value for adjusting the rotor status variable is determined from the second control error, wherein
- the first control error comprises a first acceleration target value, and the second control error comprises a second acceleration target value, and
- the second acceleration target value is compared with an acceleration actual value of the rotor so as to determine a pitch angle or a pitch rate as the target value for the adjustment of the rotor status variable,
- the first acceleration target value, the second acceleration target value and the acceleration actual value are in each case configured as an acceleration output and/or an acceleration moment, wherein
- the acceleration output is assigned to a rotor acceleration and describes an output that is required to initiate the rotor acceleration, and/or
- the acceleration moment is assigned to a rotor acceleration and describes a moment that is required to initiate the rotor acceleration.

21. Wind power installation (100) having a closed-loop controller structure according to claim 20.

22. Wind farm having a plurality of wind power installations according to claim 21.

## Revendications

1. Procédé de commande d'une éolienne (100), dans lequel l'éolienne (100) présente un rotor (106) aérodynamique, qui fonctionne à une vitesse de rotation variable et qui présente des pales de rotor (108) à angle de pale ajustable, dans lequel l'éolienne (100) est régulée dans au moins une plage de fonctionnement par une régulation de vitesse de rotation, lors de laquelle la vitesse de rotation est régulée en ajustant une variable d'état de rotor des pales de rotor (108) sur une valeur de consigne de vitesse de rotation, appelée vitesse de rotation de consigne, dans lequel
la commande de vitesse de rotation inclut, pour le réglage de la variable d'état de rotor, l'utilisation d'une valeur de réserve (262), dans lequel
la valeur de réserve est obtenue à partir d'une comparaison d'une puissance cible ou d'un couple cible de l'éolienne à une puissance instantanée ou à un couple instantané de l'éolienne dans le cas où l'éolienne ne fonctionne pas encore à la puissance cible ou au couple cible, dans lequel
la régulation de vitesse de rotation est effectuée de telle sorte que
- une première erreur de régulation du rotor est déterminée à partir d'une comparaison d'une vitesse de rotation de consigne prédéfinie (N_{Consigne}) à une vitesse de rotation réelle (N_{Réelle}) détectée,
- la première erreur de régulation est corrigée avec la valeur de réserve pour obtenir une deuxième erreur de régulation, et
- un angle de pas variable ou un taux de pas variable soit déterminé à partir de la deuxième erreur de régulation comme valeur de consigne pour le réglage de la variable d'état de rotor, dans laquelle
- la première erreur de régulation comprend une première valeur de consigne d'accélération et la deuxième erreur de régulation comprend une deuxième valeur de consigne d'accélération,
- la deuxième valeur de consigne d'accélération est comparée à une valeur réelle d'accélération du rotor pour déterminer un angle de pas variable ou un taux de pas variable comme valeur de consigne pour le réglage de la variable d'état de rotor,
- la première valeur de consigne d'accélération, la deuxième valeur de consigne d'accélération et la valeur réelle d'accélération sont respectivement réalisées comme une puissance d'accélération et/ou un couple d'accélération, dans lequel
- la puissance d'accélération est associée à une accélération de rotor et décrit une puissance nécessaire pour provoquer l'accélération de rotor et/ou
- le couple d'accélération est associé à une accélération de rotor et décrit un couple nécessaire pour provoquer l'accélération de rotor.

2. Procédé selon la revendication 1, dans lequel la puissance cible ou le couple cible est déterminé comme étant la valeur la plus faible des valeurs suivantes :
- une puissance maximale ou un couple maximal de l'éolienne,
- une puissance maximale ou un couple maximal, qui permet une limitation de puissance côté réseau, et
- une puissance maximale ou un couple maximal issu d'un mode de fonctionnement spécial de l'éolienne, en particulier d'un mode de fonctionnement de séchage de générateur et/ou d'un mode de fonctionnement de régulation de tempête.

3. Procédé selon l'une quelconque des revendications précédentes, dans lequel au moins une, de préférence plusieurs et de manière particulièrement préférée l'ensemble des opérations suivantes sont exécutées sur la valeur de réserve avant l'intégration dans la régulation de vitesse de rotation :
- la remise à zéro de la valeur de réserve dans le cas où un écart de la vitesse de rotation de consigne par rapport à la vitesse de rotation réelle détectée ne dépasse pas une valeur de seuil ;
- la remise à zéro de la valeur de réserve dans le cas où la valeur de réserve est négative ;
- la mise à l'échelle, en particulier l'atténuation, de la valeur de réserve selon une fonction de filtrage ;
- la limitation de la valeur de réserve à une valeur de réserve maximale.

4. Procédé selon l'une quelconque des revendications précédentes, dans lequel la première erreur de régulation est limitée à une plage admissible d'erreurs de régulation, avant la correction avec la valeur de réserve, au moyen d'au moins une valeur limite d'erreur de régulation.

5. Procédé selon la revendication 4, dans lequel l'au moins une valeur limite d'erreur de régulation peut être réglée et/ou une valeur limite d'erreur de régulation supérieure et une valeur limite d'erreur de régulation inférieure avec des valeurs différentes sont prévues comme l'au moins une valeur limite d'erreur de régulation.

6. Procédé selon l'une quelconque des revendications précédentes, dans lequel la première erreur de régulation est déterminée sur la base d'une variation de vitesse de rotation, d'une accélération de vitesse de rotation, d'une fonction de la variation de vitesse de rotation et/ou d'une fonction d'accélération de vitesse de rotation.

7. Procédé selon l'une quelconque des revendications précédentes, dans lequel la régulation de vitesse de rotation présente une cascade externe contenant un premier régulateur et une cascade interne contenant un deuxième régulateur, dans lequel le deuxième régulateur contient en particulier une erreur de régulation corrigée avec la valeur de réserve comme variable de référence.

8. Procédé selon la revendication 7, dans lequel l'erreur de régulation du deuxième régulateur comprend une valeur de consigne d'accélération du rotor.

9. Procédé selon l'une quelconque des revendications 7 ou 8, dans lequel la cascade interne, en particulier le deuxième régulateur, pour déterminer une ou la variable de réglage pour régler la variable d'état de rotor,
- présente un élément intégral avec une limitation d'intégrateur, et en option
- la limitation d'intégrateur peut être réglée et/ou
- présente des valeurs limites supérieures et inférieures différentes.

10. Procédé selon l'une quelconque des revendications précédentes 7, 8 ou 9, dans lequel
un signal de retour vers le deuxième régulateur comprend une puissance aérodynamique absorbée par le rotor (106), dans lequel
la puissance aérodynamique absorbée par le rotor (106) comprend une somme d'une puissance d'accélération de rotor et d'au moins une puissance absorbée par un autre composant de l'éolienne (100), en particulier une puissance de générateur d'un générateur de l'éolienne (100), dans lequel
la puissance d'accélération de rotor décrit la partie d'une puissance absorbée par le rotor (106) de l'éolienne (100) qui est convertie en une accélération du rotor (106).

11. Procédé selon la revendication 10, qui présente en outre :
- la détermination d'une puissance d'oscillation de tour aérodynamique ou d'un couple d'oscillation de tour aérodynamique,
- la correction de la puissance d'accélération de rotor en utilisant la puissance d'oscillation de tour aérodynamique ou le couple d'oscillation de tour aérodynamique.

12. Procédé selon la revendication 11, dans lequel la détermination de la puissance d'oscillation de tour aérodynamique ou du couple d'oscillation de tour aérodynamique comprend :
- la détermination d'une vitesse de vent absolue dans la zone de l'éolienne,
- la détermination d'une puissance de vent pure sur le rotor sur la base de la vitesse de vent absolue,
- la détermination d'une puissance de vent apparente ou d'un couple de vent apparente sur le rotor sur la base de la vitesse de la tête de tour et/ou de la nacelle ;
- la détermination de la puissance d'oscillation de tour aérodynamique ou du couple d'oscillation de tour aérodynamique sur la base d'une différence entre la puissance de vent apparente et la puissance de vent pure.

13. Procédé selon la revendication 12, dans lequel la vitesse de vent absolue n'est pas influencée par la vitesse de la tête de tour et correspond à une vitesse de vent déterminée dans la zone de l'éolienne (100) moins la vitesse de la tête de tour et/ou de la nacelle de l'éolienne.

14. Procédé selon l'une quelconque des revendications précédentes 12 ou 13, dans lequel la puissance ou le couple du rotor est corrigé(e) de la puissance d'oscillation de tour aérodynamique ou du couple d'oscillation de tour aérodynamique multiplié(e) par un facteur, dans lequel le facteur de multiplication est compris entre 0,5 et 5, de préférence entre 1 et 4.

15. Procédé selon l'une quelconque des revendications précédentes, dans lequel la régulation de vitesse de rotation est réalisée pour réguler l'éolienne dans au moins une plage de vitesses de rotation pouvant être spécifiée de la plage de charge partielle et/ou dans une plage de transition de la plage de charge partielle à la plage de pleine charge avec une superposition d'une régulation de puissance de vitesse de rotation et d'une régulation de pas variable sur la valeur de consigne de vitesse de rotation, dans lequel
dans le cas de la régulation de pas variable, la vitesse de rotation est régulée en ajustant la variable d'état de rotor, en particulier un angle de pas variable, à la valeur de consigne de vitesse de rotation, et dans lequel
lors de la régulation de puissance de vitesse de rotation, la vitesse de rotation est régulée en ajustant une variable d'état de générateur à régler, en particulier une puissance de générateur ou un couple de générateur.

16. Procédé selon la revendication 15, dans lequel
la plage de transition dans la plage de charge partielle se situe dans une plage de vitesses de rotation supérieure qui est **caractérisée par** des vitesses de rotation à partir d'une vitesse de rotation de transition, dans lequel la plage de vitesses de rotation supérieure se situe en particulier au-dessus d'une plage d'évitement de vitesse de rotation, dans lequel
l'éolienne est **caractérisée par** une vitesse de rotation nominale, et la vitesse de transition est d'au moins 80 %, en particulier d'au moins 85 %, de la vitesse de rotation nominale et/ou d'une vitesse de rotation de consigne de la régulation de pas variable.

17. Procédé selon la revendication 16, dans lequel
pour la régulation de puissance de vitesse de rotation, la valeur de consigne de vitesse de rotation est spécifiée par l'intermédiaire d'une courbe caractéristique de vitesse de rotation de transition, qui forme la ou une courbe caractéristique de vitesse de rotation, dans lequel
pour une vitesse de rotation avec une valeur de vitesse de rotation correspondant à la vitesse de rotation de transition, la courbe caractéristique de vitesse de rotation de transition s'étend verticalement de telle sorte que la vitesse de rotation est constante à mesure que la variable d'état de générateur augmente jusqu'à ce que la variable d'état de générateur atteigne une première valeur de référence de générateur prédéterminée qui est inférieure à une valeur nominale de la variable d'état de générateur et/ou la courbe caractéristique de vitesse de rotation de transition présente une pente positive à partir de la vitesse de rotation de transition et/ou à partir de la première valeur de référence de générateur, de telle sorte que les valeurs de la variable d'état de générateur augmentent au fur et à mesure que la vitesse de rotation augmente jusqu'à ce qu'une valeur nominale de la variable d'état de générateur soit atteinte.

18. Procédé selon l'une quelconque des revendications précédentes 15 à 17, dans lequel
la deuxième erreur de régulation est transmise de la régulation de puissance de vitesse de rotation à la régulation de pas variable et la régulation de puissance de vitesse de rotation et la régulation de pas variable fonctionnent au moins en partie en parallèle et sont harmonisées entre elles par l'intermédiaire de la deuxième erreur de régulation, et/ou une commutation ou une transition entre la régulation de puissance de vitesse de rotation et la régulation de pas variable a lieu en fonction de la deuxième erreur de régulation.

19. Procédé selon l'une quelconque des revendications précédentes 15 à 18, dans lequel
la régulation de puissance de vitesse de rotation est prioritaire sur la régulation de pas variable, en particulier de telle sorte que la régulation de pas variable est totalement ou en partie inhibée tant que la régulation de puissance de vitesse de rotation n'atteint pas une limite de variable de réglage, et/ou la régulation de pas variable commande la vitesse de rotation en plus en fonction d'une valeur réelle d'accélération du rotor, et plus une régulation de la vitesse de rotation par la régulation de pas variable est inhibée, plus la valeur de consigne de générateur est inférieure à une limite de valeur de consigne de générateur lors de la régulation de puissance de vitesse de rotation.

20. Structure de régulateur pour une éolienne (100), dans laquelle l'éolienne (100) présente un rotor (106) aérodynamique qui fonctionne à une vitesse de rotation variable et qui présente des pales de rotor (108) à angle de pale ajustable, dans laquelle l'éolienne (100) est régulée dans au moins une plage de fonctionnement par une régulation de vitesse de rotation, dans laquelle la vitesse de rotation est régulée en ajustant une variable d'état de rotor des pales de rotor (108) à une valeur de consigne de vitesse de rotation, appelée vitesse de rotation de consigne, dans laquelle
la structure de régulateur est réalisée pour inclure l'utilisation d'une valeur de réserve (262) pour le réglage de la variable d'état de rotor, dans laquelle la valeur de réserve est obtenue à partir d'une comparaison d'une puissance cible ou d'un couple cible de l'éolienne à une puissance instantanée ou à un couple instantané de l'éolienne dans le cas où l'éolienne ne fonctionne pas encore à la puissance cible ou au couple cible, dans laquelle
la structure de régulateur est réalisée pour que
- une première erreur de régulation du rotor soit déterminée à partir d'une comparaison d'une vitesse de rotation de consigne spécifiée (N_{Consigne}) à une vitesse de rotation réelle (N_{Réelle}) détectée,
- la première erreur de régulation soit corrigée avec la valeur de réserve pour obtenir une deuxième erreur de régulation, et
- un angle de pas variable ou un taux de pas variable soit déterminé à partir de la deuxième erreur de régulation comme valeur de consigne pour le réglage de la variable d'état de rotor, dans laquelle
- la première erreur de régulation comprend une première valeur de consigne d'accélération et la deuxième erreur de régulation comprend une deuxième valeur de consigne d'accélération,
- la deuxième valeur de consigne d'accélération est comparée à une valeur réelle d'accélération du rotor pour déterminer un angle de pas variable ou un taux de pas variable comme valeur de consigne pour le réglage de la variable d'état de rotor,
- la première valeur de consigne d'accélération, la deuxième valeur de consigne d'accélération et la valeur réelle d'accélération sont respectivement réalisées comme une puissance d'accélération et/ou un couple d'accélération, dans laquelle
- la puissance d'accélération est associée à une accélération de rotor et décrit une puissance nécessaire pour provoquer l'accélération de rotor et/ou
- le couple d'accélération est associé à une accélération de rotor et décrit un couple nécessaire pour provoquer l'accélération de rotor.

21. Éolienne (100) avec une structure de régulateur selon la revendication 20.

22. Parc éolien avec plusieurs éoliennes selon la revendication 21.
